(19) **Europäisches Patentamt / European Patent Office / Office européen des brevets**

(11) **EP 1 990 938 A1**

(12) **EUROPEAN PATENT APPLICATION**

(43) Date of publication:
    **12.11.2008 Bulletin 2008/46**

(51) Int Cl.:
    *H04J 3/06* (2006.01)    *H04L 12/56* (2006.01)

(21) Application number: **07107929.7**

(22) Date of filing: **10.05.2007**

(84) Designated Contracting States:
    **AT BE BG CH CY CZ DE DK EE ES FI FR GB GR HU IE IS IT LI LT LU LV MC MT NL PL PT RO SE SI SK TR**
    Designated Extension States:
    **AL BA HR MK RS**

(71) Applicant: **Deutsche Thomson OHG**
    **30625 Hannover (DE)**

(72) Inventors:
• **Siemens, Eduard**
    **31319, Sehnde (DE)**

• **Aust, Andreas**
    **30177, Hannover (DE)**
• **Brocke, Jens**
    **30880, Laatzen (DE)**
• **Gläser, Frank**
    **30163, Hannover (DE)**
• **Köhler, Ralf**
    **30455, Hannover (DE)**
• **Kubsch, Stefan**
    **31559, Hohnhorst (DE)**

(54) **Method for synchronizing a clock of a network component with a clock of a further network component and network component therefor**

(57) The invention relates to a method for synchronizing a clock of a network component (A) with a clock of a further network component (B) communicatively connected to the network component (A) in a network and a network component, whereby the method comprises the following steps: determining a set of forward transition delays for transmission of messages from the network component (A) to the further network component (B) and a set of corresponding backward transition delays for transmission of messages from the further network component (B) to the network component (A), selecting a minimum forward transition delay (minF) from the set of forward transition delays, selecting a minimum backward transition delay from the set of backward transition delays (minB), deriving an estimated value for an offset between the clock of the network component (A) and the clock of the further network component (B) from the selected minimum forward transition delay (minF) and minimum backward transition delay (minB), and adjusting the clock of the network component (A) in accordance with the estimated value for the offset estimate.

Fig. 3

**EP 1 990 938 A1**

**Description**

The invention relates to a method for synchronizing a clock of a network component with a clock of a further network component, and a network component.

Background of the Invention

In many distributed computing applications and in particular for real time applications in packet switched networks, it is of great importance to accurately match information to a reference time, for example the time at which this information has been produced. For example, in a packet based network, data may be produced in real time by a sending network component to be transmitted to a receiving network component for further procuring. For this purpose, the data is gathered into packets each containing parts of the data, and submitted to the receiving network component, where the data parts are put together.

Due to variations in transmission paths and in queuing hold-up, the transmission delays experienced by the different packets can vary considerably in a non-deterministic way. In extreme cases, a packet sent earlier may arrive at a later time than one that was sent later. In order for the receiving network component to be able to process the packets correctly, a time stamp may be attached to each packet, corresponding to a reference time for the enclosed data part. In this case, the receiving network component will be able to match the data parts accurately to the corresponding reference times.

For the above example, it is necessary that a clock of the sending network component and the receiving network component are synchronised. In general terms, high-precision time measurement is a key precondition for enabling development of any high-performance distributed computing application. Depending on the application, either a precise absolute time reference (for example coordinated universal time or UTC time) or a relative time reference has to be kept.

Furthermore, flow control as well as congestion control of transport protocols heavily rely on measured round trip times (RTT) and/or transition times (one-way delays, OWDs) of data packets exchanged between a sending network component or sender and a receiving network component or receiver. Since supplying reference time information, for example in the form of time stamps, takes some constant or variable amount of time, estimation of transmission duration of this information between the sender and the receiver is the main issue of time synchronization on packet switched networks. To address this issue, the so called Network Time Protocol (NTP), which is disclosed in detail in D.L. Mill,"The Network Time Protocol (Version 3) Specification, Implementation and Analysis", RFC 1305, IEFT, March 1992, has been designed to synchronize local clocks of network components over a packet switched network.

The core component of NTP is a clock offset calculation routine based on the so called Cristian Algorithm (CA), which will be summarized in the following. A requesting network component sends a data packet containing a time request to a replying network component at a sending time $T_S$. The replying network component answers as fast as possible and sends back a receive time stamp $T_R$ enclosed in a reply packet, which is received at a reply receive time $T_{RR}$. From these time values a forward transition delay or one-way delay in forward direction ($OWD_f$) and a backward transition delay or one-way delay in backward direction ($OWD_b$) are calculated as $OWD_f = T_R - T_S$ and $OWD_b = T_{RR} - T_R$. Further, it is assumed that the actual one-way delays in both directions are equal, such that a difference between $OWD_f$ and $OWD_b$ is attributed solely to an offset between the clock of the requesting network component and the clock of the replying network component. This synchronisation offset is calculated as $(OWD_f - OWD_b)/2$.

The Cristian Algorithm has the significant disadvantage that the estimate for the synchronisation offset is only accurate, when the actual forward transition delay is equal to the actual backward transition delay. That is, when the communication between the two network components is symmetrical. However, in presence of asymmetric delays, the calculations will be erroneous. In real networks, the one-way delays are usually asymmetric because of asymmetric network topology, like Asymmetric Digital Subscriber Lines (ADSL lines) and asymmetric routes, and / or stochastic packet delays within network components. Herein systematic errors caused by asymmetric network topologies are much less critical for real time applications than errors due to stochastic packet delays caused by variable one-way delays, for example due to variable queuing delays.

The Invention

Thus it is an objective of the invention to provide a method and a network component, such that a more accurate synchronisation between clocks of different network components in a network can be achieved.

The objective is met by a method for synchronising a clock of a network component with a clock of a further network component according to independent claim 1 and a network component according to independent claim 8.

According to one aspect of the invention, a method for synchronizing a clock of a network component with a clock of a further network component communicatively connected to the network component in a network is provided, the method comprising the following steps: determining a set of forward transition delays for transmission of messages from the network component to the further network component and an independent set of backward transition delays for transmission of messages from the further network component to the network component, selecting a minimum forward transition delay from the set of forward transition delays, selecting a minimum backward transition delay from the set of backward transition delays, deriving an estimated value for an offset between the clock of the network component and the clock of the further network component from the selected minimum forward transition delay and minimum backward transition delay, and adjusting the clock of the network component in accordance with the estimated value for the offset estimate.

According to a further aspect of the invention, a network component is provided, comprising a clock, communication means configured to provide connections to at least one further network component in a network, requesting means connected to the communication means and configured to generate and transmit a request to the further network component, receiving means connected to the communication means and configured to receive a reply to the request from the further network component, analyzing means connected to the receiving means and the clock and configured to analyze the received reply, determine sets of transition delays, and calculate an estimate for a clock synchronisation offset, a memory connected to the analyzing means and configured to store the sets of transition delays, and clock adjusting means connected to the analyzing means and configured to adjust the clock in accordance to the calculated offset estimate.

One advantage of the invention over the prior art is that multiple measurements of transition times are being performed in order to obtain sets of transition times, from which minimum values are selected. Therefore, errors in the offset estimate due to variations in individual measurements can be minimized. Such variations may stem from changes in the transmission paths for messages through the network, or they may arise due to different hold-up times for the messages, for example in input and output queues of the network components. A further significant feature is that the minimum transition delays in the forward and backward direction are selected from their respective sets independently. This means that the minimum forward transition delay is not necessarily the forward transition delay that corresponds to the minimum backward transition delay. This is due to the fact that generally a message that experiences a minimal forward transition delay does not necessarily also experience a minimal backward transition delay. Thus, the invention has the advantage that an estimate for the offset can be calculated with a tighter error bound.

By talking about a backward transition delay and a corresponding forward transition delay, it is meant that the forward transition delay and the backward transition delay belong to the same communication cycle comprising a request message and a reply message. For instance, if a message sent to a network component experiences a certain forward transition delay, then the transition delay experienced by the reply message to that message is the corresponding backward transition delay. Furthermore, assuming that the processing time in the network component for processing the message and generating the reply is negligible, the forward transition delay and the corresponding backward transition delay can be added together to obtain a round trip time.

In an advantageous embodiment of the invention, the step of determining the set of forward transition delays and the set of corresponding backward transition delays further comprises a step of determining consecutive round trip times for communication between the network component and the further network component, whereby the round trip times are essentially the sum of a corresponding forward transition delay and a corresponding backward transition delay, until a set of stable round trip times comprising a predetermined number of consecutively determined round trip times is found such that the round trip times in the set of round trip times deviate from a minimum round trip time in the set of round trip times by less than a predetermined maximum deviation, logging in the set of forward transition delays the forward transition delays corresponding to the round trip times in the set of round trip times, and logging in the set of backward transition delays the backward transition delays corresponding to the round trip times in the set of round trip times.

Thus a minimum round trip time and a stable region around this minimum round trip time are determined. Obtaining a stable region ensures that the corresponding forward and backward transition delays can be utilized to calculate the offset estimate with a higher level of accuracy. By choosing a small enough predetermined maximum deviation, it can be ascertained that the round trip times in the stable region and the corresponding forward and backward transition delays are not affected by possible radical changes in the communication between the two network components. For example in the case of packet based communication the predetermined maximum deviation may be chosen to be on the order of a few milliseconds, which is much smaller than transition delay variations due to a filling or emptying of packet queues, which may be on the order of 10-30 ms, and even smaller that transition delay variations due to communication path changes, which may be on the order of many tens of milliseconds.

In a further development of the invention, the step of determining a forward transition delay and a corresponding backward transition delay comprises sending a request at a request time from the network component to the further network component, sending a reply to the request at a reply time from the further network component to the network component, receiving the reply by the network component at a reply receive time, calculating the forward transition delay by subtracting the request time from the reply time and calculating the corresponding backward transition delay by subtracting the reply time from the reply receive time. Thus a simple method for determining the forward and backward transition delays is provided.

A favourable enhancement of the invention further comprises a step of enclosing a time stamp comprising the reply time with each reply that is sent from the further network component to the network component. A time stamp is a simple and effective tool to provide the reply time to the network component for further calculation. The time stamp may be the main information in the reply. Alternatively, the reply may comprise other information or data requested by the network component along with the reply time.

A favourable embodiment of the invention further comprises a step of sending the requests at equal time distances. In an advantageous development of the invention, the request and the reply are sent as data packets.

In a further embodiment of the invention, the sets of forward transition delays and backward transition delays are updated continuously. Herein to update a set may comprise discarding the entire set and re-determining a new set with new entries. Alternatively, the update procedure may comprise adding new determined values to the set at continuous time intervals, as new measurements are being performed.

Drawing

In the following, the invention will be described by means of advantageous embodiments with reference to figures of a drawing. Herein:

Fig. 1          shows a timing diagram, depicting time delays experienced by packets sent between network nodes A and B;

Fig. 2          shows a further timing diagram, depicting time delays experienced by packets sent between network nodes A and B;

Fig. 3          shows a timing diagram for a series of packets sent between network nodes A and B;

Fig. 4          shows the same diagram as Fig. 3, wherein further characteristics are depicted;

Fig. 5          shows a plot of round trip time measurements, using different approaches;

Fig. 6          shows a plot of synchronisation offset estimates, calculated based on the measurements shown in Fig. 5;

Fig. 7          shows a plot of synchronisation offset estimates, calculated based on measurements of a stable region of round trip times;

Fig. 8 and 9    show for comparison plots of error bounds for synchronisation offset estimates which are calculated using three different approaches; and

Fig. 10         shows a plot of a statistical error bound.

Embodiments

In the following, first a known method of estimating an offset between a clock of a network component, network node A or just node A, and a clock of a further network component, network node B or just node B, is described. This method is generally known as the Cristian Algorithm. Node A and node B are connected over network connections and communicate via data packets, for example in an Internet environment.

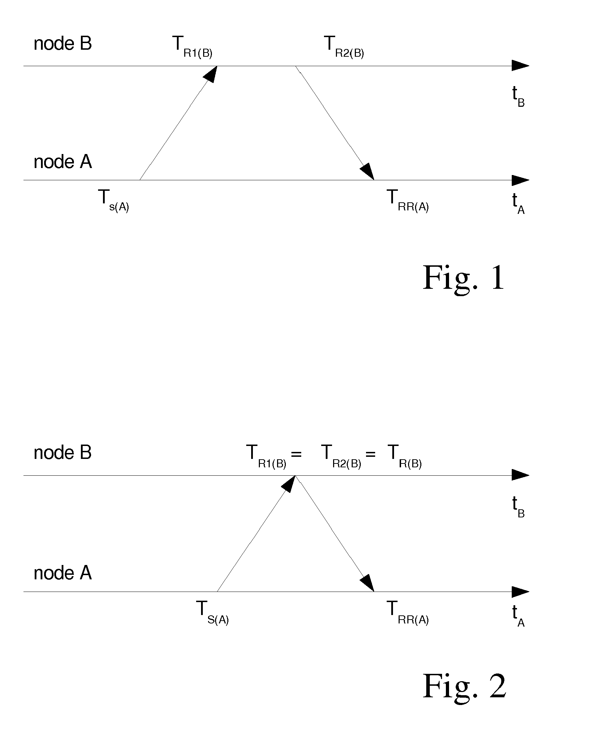

Fig. 1 shows a timing diagram for data packets sent between nodes A and B. A time line with the time variable $t_A$ belongs to a clock of node A, while another time line with the time variable $t_B$ belongs to a clock of node B. Arrows pointing from one time line to the other indicate a packet transmission from one node to the other. As shown in Fig. 1, Node A sends a data packet comprising a time request to node B at time $T_{S(A)}$. Node B receives the data packet at time $T_{R1(B)}$. After processing the request packet, node B replies as fast as possible and sends at a reply time $T_{R2(B)}$ a data packet containing a receive time stamp marking the receive time $T_{R1(B)}$ back to the sender node A. The data packet with the time stamp is received by node A at time $T_{RR(A)}$. The time difference between $T_{R1(B)}$ and $T_{R2(B)}$ is the processing time on node B and is usually much shorter than the time difference between times $T_{RR(A)}$ and $T_{S(A)}$, and may be neglected. It can thus be assumed $T_{R1(B)} = T_{R2(B)} = T_{R(B)}$. This relation is shown in Fig. 2.

Note that the referenced times are measured by the respective clocks of the nodes A and B. That is, times $T_{RR}$ and $T_S$ are measured by the clock of node A, while time $T_{R(B)}$ is measured by the clock of node B. In general, due to the offset and skew of the respective clocks, nodes A and B measure different times at the same point in a reference time. This aspect is made clear by the use of different time variables $t_A$ and $t_B$ in Fig. 1 and Fig. 2. Therefore, if at a particular point in time the clock of node B deviates from that of node A by an offset of K, this deviation affects the measurement of $T_{R(B)}$. Subsequently, if a transition delay or one-way delay (OWD) is calculated using $T_{S(A)}$, $T_{R(B)}$, and $T_{RR(A)}$, it differs from an actual or real OWD by a value of K. For applying the Cristian Algorithm, it has to be assumed that the real OWD in forward direction is equal to the real OWD in backward direction, contrary to the measured OWDs.

In the following, the calculated time offset between node A and node B is denoted as $\Delta$. That means that $\Delta$ is an estimate for K. Furthermore, the measured one-way delays in forward and backward direction are denoted as $OWD_f$ and $OWD_b$, respectively. They can be calculated according to the following equations (1) and (2).

$$OWD_f = T_{R(B)} - T_{S(A)} \qquad (1)$$

$$OWD_b = T_{RR(A)} - T_{R(B)} \qquad (2)$$

According to the Cristian Algorithm, $\Delta$ can be calculated as shown in the following equation (3).

$$\Delta_{CA} = (OWD_f - OWD_b)/2 \qquad (3)$$

Note that $\Delta_{CA}$ is equal to K, only if the assumption of symmetrical forward and backward one-way delays is fulfilled. However, in the presence of asymmetric delays, where the real OWDs in forward and backward direction are not equal, the estimate will lead to erroneous results. As stated above, in real networks OWDs are usually asymmetric. Hereby systematic errors caused by asymmetric network topologies are much less critical for real time applications than errors caused by variable OWDs. Since no guaranties for symmetric one-way delays can be given in real networks, only the time causality of the three events, namely sending a packet by node A, receiving the packet and sending the reply packet by node B, can be stated, leading to the inequation $T_{S(A)} < T_{R(B)} < T_{RR(A)}$. Thus, if $T_{R(B)}$ is estimated to be in the middle between points in time $T_{RR(A)}$ and $T_{S(A)}$, the maximum calculation error or error bound $\delta$ for the estimated synchronisation offset according to the Cristian Algorithm will fulfil the following equation (4).

$$\delta = (T_{RR(A)} - T_{S(A)})/2 = RTT/2 \qquad (4)$$

In order to be able to perform the measurements of the method to be described below, it is advantageous that a few prerequisites are fulfilled. First, the network topology should not change within a measurement period. Second, a time drift, which is due to a difference of clock frequency of the clocks of node A and node B, should be very small, so that the time differences between clocks don't change during a measurement period. These prerequisites are almost always fulfilled, if the measurement period is in the order of magnitude of a few seconds.

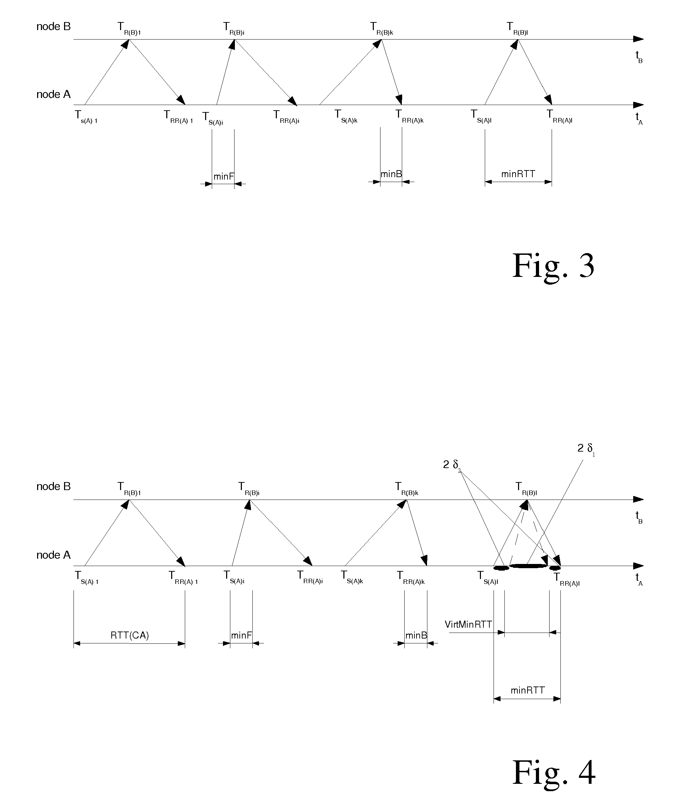

For time synchronization, measurements according to Fig. 2 are performed repeatedly. Fig. 3 shows an example of a timing diagram of a series of request and reply packets being sent between node A and node B in order to perform such measurements. For the purpose of illustration, only four communication cycles are depicted, each comprising a request packet being transmitted from node A to node B and a reply packet being transmitted from node B back to node A. The request packets being sent by node A and depicted in Fig. 3 are sent out at times $T_{S(A)1}$, $T_{S(A)i}$, $T_{S(A)k}$, and $T_{S(A)l}$. While the one-way delays for each communication cycle can be calculated in accordance to the above equations (1) and (2), the round trip time (RTT) can be calculated as the sum of corresponding OWDs, or alternatively and simpler as RTT = $T_{RR(A)i}$ - $T_{S(A)i}$. The number of communication cycles to be measured can in fact be much higher, for example a few hundred measurements.

The request and reply packets are exchanged between node A and node B, until a set of RTTs near a measured minimum round trip time minRTT is determined. This set is called a stable region around minRTT. For this purpose, first a maximum deviation $d_{max}$ as well as the minimum region width $w_{min}$ suitable for a given network topology has to be chosen. The stable region around minRTT means that at least $w_{min}$ consecutive samples, including the sample with an RTT equal to minRTT, have RTT values that deviate from minRTT by less than or equal to $d_{max}$.

The stable region can be found by the following procedure. First minRTT is set to infinity during an initialization process. Then, for each RTT communication cycle or pair of request and reply packets, an RTT is calculated and compared to the stored minRTT value. If the measured RTT is smaller than the stored minRTT, minRTT is set to the measured RTT. Additionally, the number of measured RTT values that deviate from a current minRTT value by less that $d_{max}$ is recorded. Once at least $w_{min}$ consecutive RTTs have been recorded that deviate from minRTT by less that $d_{max}$, these RTT values are logged as a set of stable RTT values. The corresponding one-way delays are also logged and utilized in the further calculation to obtain an estimate for the synchronisation offset between the clocks of node A and node B.

In the next step, a minimum forward one-way delay (minF) and a minimum backward one-way delay (minB) are calculated according to the following equations (5) and (6). Thus the minimum forward one-way delay is the minimal value logged in the set of forward one-way delays, while the minimum backward one-way delay is the minimal value logged in the set of backward one-way delays. With increasing number of data packets exchanged between node A and node B, the probability increases that data packets run through waiting queues, which are completely empty and lead to minimum processing times within the nodes. It is thus likely that the minimum one-way delay in forward or in backward direction represents the physical limitation on the one-way delays. By physical limitation it is meant that elements such as waiting queues do not affect the one-way delay.

$$minF = min(T_{R(B)j} - T_{S(A)j}), \quad 1 <= j <= w_{min} \quad (5)$$

$$minB = min(T_{RR(A)n} - T_{R(B)n}), \quad 1 <= n <= w_{min} \quad (6)$$

Then a so called virtual minimum RTT (VirtMinRTT) is calculated by way of the following equation (7).

$$VirtMinRTT = minF + minB \quad (7)$$

Thus, assuming that minF and minB are indeed the smallest physically possible one-way delays that a data packet can experience, VirtMinRTT defines a lowest round trip time, constrained by physical bounds, for a packet sent from node A to node B and back from node B to node A.

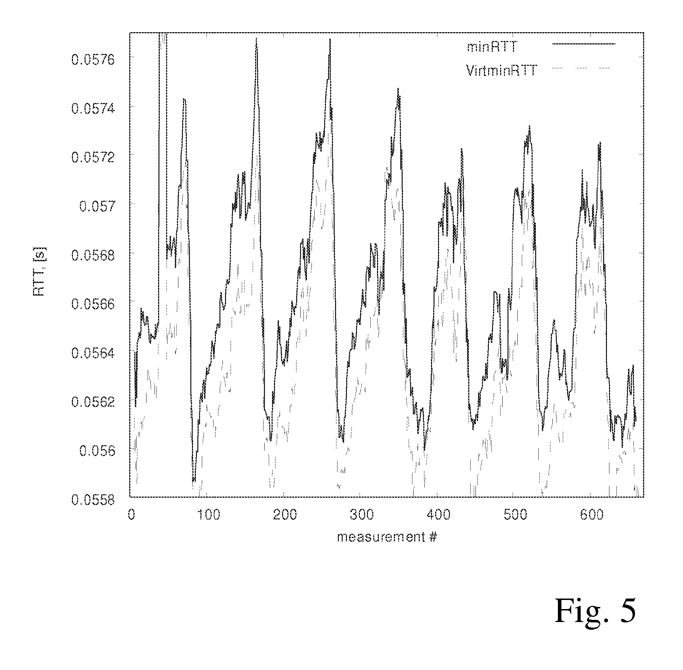

Fig. 5 shows plots of minRTT and VirtMinRTT for a series of data packets sent from node A to node B and back. Here, the abscissa shows the number of measurements. Each measurement is performed using the above described process of finding a stable region and calculating minRTT and VirtMinRTT. In general, VirtMinRTT is not equal to minRTT. This means, the packet that has experienced the minimum queuing or processing delays on the forward path from node A to node B is not the same one that has experienced minimal delay on the backward path from node B to node A. As can be seen from Fig. 5, VirtMinRTT is consistently lower than minRTT.

Since a constant network topology over the measurement period has been assumed as a precondition, minF and minB are equal to or at least approximately equal to the physically bounded minimum one-way delay. However, since the clock of node B is not synchronized to the clock of node A, minF and minB represent the measured one-way delays, not the real or actual ones. If the clock of node B has an unknown clock synchronisation offset K with respect to the clock of node A, real one-way delays $minF_r$ and $minB_r$ may be calculated using the following equations (8) and (9). That means $minF_r$ and $minB_r$ are the actual minimum one-way delays in the forward and backward direction, respectively, when corrected by the synchronisation offset K.

$$minF_r = minF - K \quad (8)$$

$$minB_r = minB + K \quad (9)$$

The equations (8) and (9) can be inserted into equation (7) to arrive at the following equation (10), which shows that the value for VirtMinRTT is independent of the synchronisation offset.

$$\mathrm{VirtMinRTT\ =\ minF\ +\ minB\ =\ minF_r\ +\ minB_r} \qquad (10)$$

Utilizing the forward and backward one-way delays minF and minB corresponding to VirtMinRTT, an estimate for the synchronisation offset can be calculated according to equation (11).

$$\Delta\ =\ \mathrm{(minF\ -\ minB)/2} \qquad (11)$$

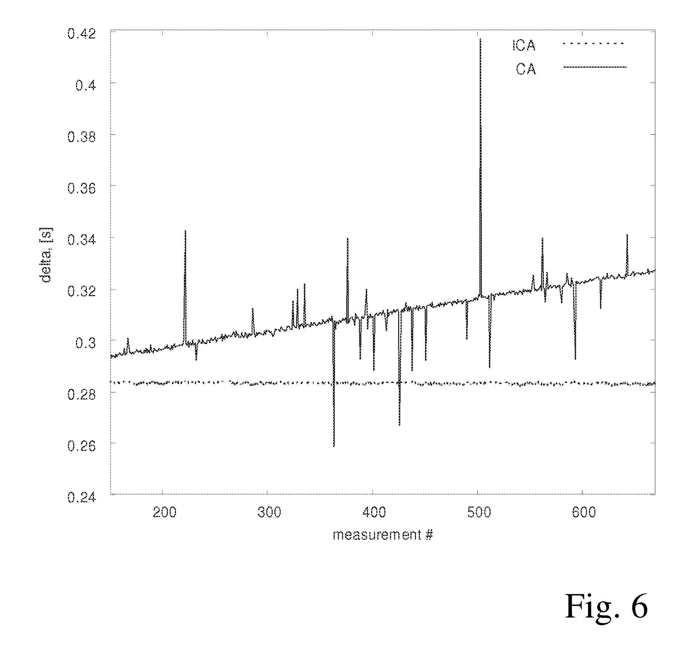

Fig. 6 shows a plot of calculated values of $\Delta$ (dashed line). This method of providing an estimate for the synchronisation offset may be called an Improved Cristian Algorithm (ICA). It differs from the Cristian Algorithm (CA) described above significantly. First, the method according to the ICA is based on a series of measurements, while the CA is based on a single measurement. Furthermore, the calculation according to the ICA is based on determining minimal values of forward and backward one-way delays, minF and minB, independently, while the forward and backward one-way delays, $OWD_f$ and $OWD_b$, utilized in the CA are values determined in one and the same communication cycle by sending a packet from node A to node B and back to node A. As a result, $\Delta$ is more consistant than $\Delta_{CA}$, and therefore provides a more accurate estimate for the synchronisation offset K, as can be seen from Fig. 6, where the $\Delta_{CA}$ values calculated for the same set of measurements are plotted for comparison.

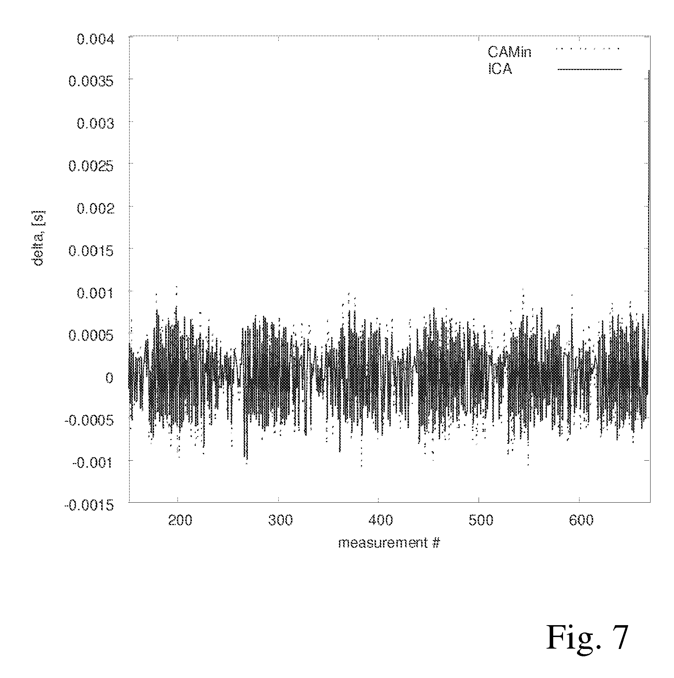

As an alternative, a different estimate of the synchronisation offset $\Delta_{CAmin}$ may be calculated, using the forward and backward one-way delays corresponding to the minimal round trip time RTT, instead of using the one-way delays corresponding to VirtMinRTT as in the ICA. This method will be referred to as the CAmin method. The results of this calculation are plotted for a set of measurements, along with $\Delta$ calculated using the ICA for the same set of measurements, in Fig. 7. As can be seen from Fig. 7, $\Delta$ (solid line) has a consistently lower bound (means is closer to the average of deltas) than or equal to $\Delta_{CAmin}$ (dotted line).

The calculation of $\Delta$ is based on laying the estimation in the middle of the measurement triangle. Hereby a deterministic bound $\delta_1$ of the calculation error is based on time causality of events relating to the delays $T_{S(A)}$, $T_{R(B)}$, and $T_{RR(A)}$, shown in Fig. 4. The deterministic bound $\delta_1$ can be calculated using equation (12).

$$\delta_1\ =\ \mathrm{VirtMinRTT/2} \qquad (12)$$

For the values of VirtMinRTT, minRTT and $RTT_i$ (denoting any single round trip time value), the following inequation (13) holds.

$$\mathrm{VirtMinRTT\ <=\ minRTT\ <=\ RTT_i} \qquad (13)$$

This inequation implies that the error bound $\delta_1$ is at least as good as the error bound estimated using the conventional Cristian Algorithm. Furthermore, if VirtMinRTT is not equal to minRTT, a tighter error bound is obtained compared to using an arbitrary other measurement point. Since this conclusion can be applied deterministically to the proposed algorithm, $\delta_1$ is referred to as the deterministic error bound.

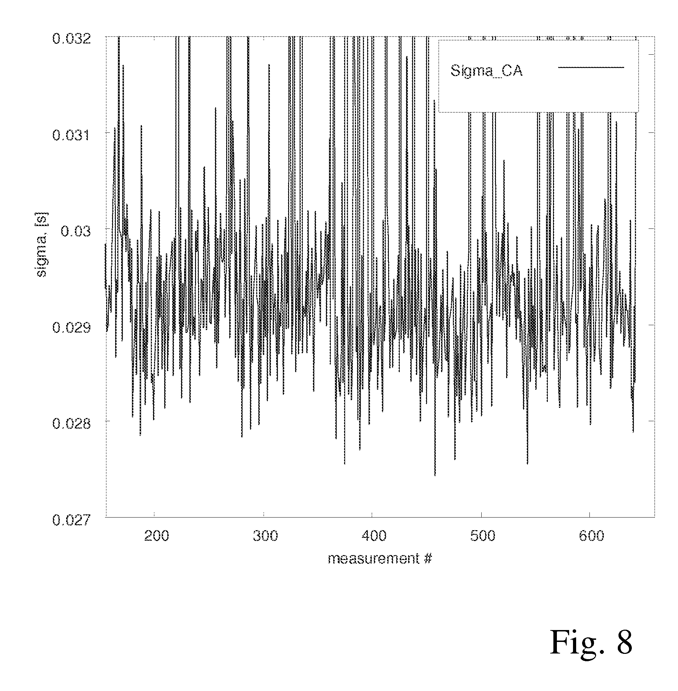

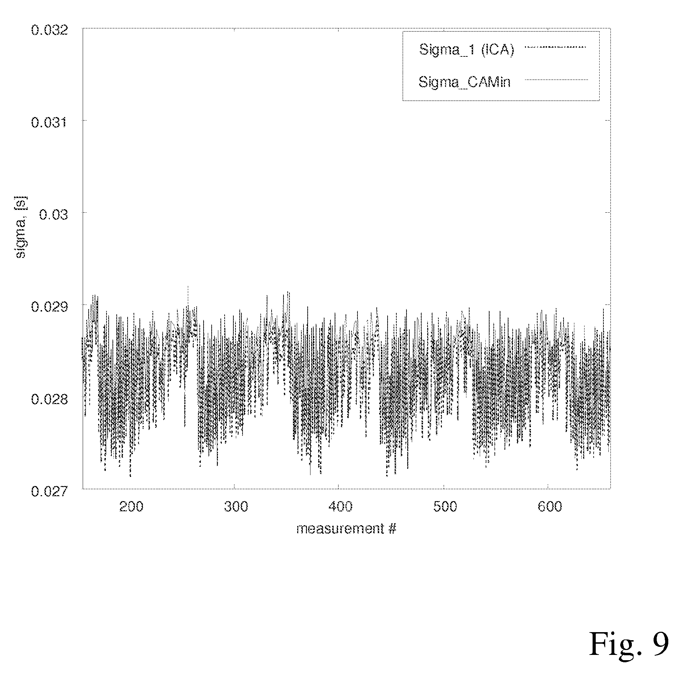

Fig. 8 shows a plot of the error bound $\delta_{CA}$ for the offset estimate according to the conventional Cristian Algorithm, while Fig. 9 shows a plot of the error bounds $\delta_{CAmin}$ (course dotted line) and $\delta_{ICA}$ (fine dotted line) for the estimates obtained according to the above described CAmin method and ICA method, respectively. As can be seen by comparing Fig. 8 and Fig. 9, the Cristian Algorithm results in the highest error bound figures, while the ICA method results in the lowest error bound figures, thus providing the most accurate estimate for the synchronisation offset.

From the stochastic point of view, one can tie the time range of events much closer. If the assumption holds that minF and minB represent the physical bound of the one-way delays, an error bound can be defined, which is equal to half of the difference between minRTT and VirtMinRTT, as shown in the following equation (14). This error bound is then referred to as the statistical error bound.

$$\delta_2\ =\ \mathrm{(minRTT\ -\ VirtMinRTT)/2} \qquad (14)$$

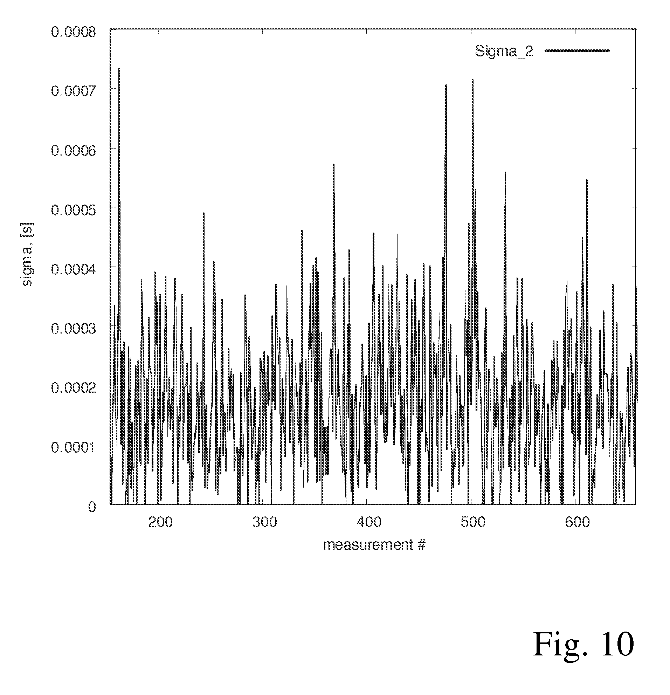

Fig. 10 shows a plot of calculated statistical error bounds.

The statistical error bound has the following significance. The probability that the estimated synchronisation offset $\Delta$ is within the statistical error bound $\delta_2$ from the real synchronisation offset K is larger or equal to the probability that the values minF and minB are indeed the physically bound one-way delays. In other words, even if minF and minB are not the lowest physically possible one-way delays for packet transmission, $\delta_2$ is a useful figure for the error bound for the estimated synchronisation offset $\Delta$. As can be seen from a comparison between Fig. 9 and Fig. 10, according to the statistical error bound $\delta_2$, the estimated synchronisation offset $\Delta$ can be a much better estimate for K than suggested by the deterministic error bound $\delta_1$.

The features of the invention as disclosed in the above description, in the claims and in the drawing may be of importance for the implementation of the various embodiments of the invention both individually and in any desired combination.

**Claims**

1.   Method for synchronizing a clock of a network component (A) with a clock of a further network component (B), communicatively connected to the network component (A) in a network, the method comprising the following steps:

- determining a set of forward transition delays for transmission of messages from the network component (A) to the further network component (B) and a set of backward transition delays for transmission of messages from the further network component (B) to the network component (A),
- selecting a minimum forward transition delay (minF) from the set of forward transition delays,
- selecting a minimum backward transition delay from the set of backward transition delays (minB),
- deriving an estimated value for an offset between the clock of the network component (A) and the clock of the further network component (B) from the selected minimum forward transition delay (minF) and minimum backward transition delay (minB), and
- adjusting the clock of the network component (A) in accordance with the estimated value for the offset estimate.

2.   Method according to claim 1, **characterized in that** the step of determining the set of forward transition delays and the set of backward transition delays further comprises a step of determining consecutive round trip times for communication between the network component (A) and the further network component (B), whereby the round trip times are essentially the sum of a corresponding forward transition delay and a corresponding backward transition delay, until a set of stable round trip times comprising a predetermined number of consecutively determined round trip times is found such that the round trip times in the set of round trip times deviate from a minimum round trip time (minRTT) in the set of round trip times by less than a predetermined maximum deviation (dmax), logging in the set of forward transition delays the forward transition delays corresponding to the round trip times in the set of round trip times, and logging in the set of backward transition delays the backward transition delays corresponding to the round trip times in the set of round trip times.

3.   Method according to claim 1 or 2, **characterized in that** the step of determining a forward transition delay and a corresponding backward transition delay comprises sending a request at a request time (TS) from the network component (A) to the further network component (B), sending a reply to the request at a reply time (TR) from the further network component (B) to the network component (A), receiving the reply by the network component (A) at a reply receive time (TRR), calculating the forward transition delay by subtracting the request time (TS) from the reply time (TR) and calculating the corresponding backward transition delay by subtracting the reply time (TR) from the reply receive time (TRR).

4.   Method according to claim 3, further comprising a step of enclosing a time stamp comprising the reply time (TR) with each reply that is sent from the further network component (B) to the network component (A).

5.   Method according to claim 3 or 4, further comprising a step of sending the requests at equal time distances.

6.   Method according to one of the preceding claims 3 to 5, **characterized in that** the request and the reply are sent as data packets.

7.   Method according to one of the preceding claims, **characterized in that** the sets of forward transition delays and backward transition delays are updated continuously.

8. Network component (A) for placing into a network, comprising:

- a clock,
- communication means configured to provide connections to at least one further network component (B) in a network,
- requesting means connected to the communication means and configured to generate and transmit a request to the further network component (B),
- receiving means connected to the communication means and configured to receive a reply to the request from the further network component (B),
- analyzing means connected to the receiving means and the clock and configured to analyze the received reply, determine sets of transition delays, and calculate an estimate for a clock offset,
- a memory connected to the analyzing means and configured to store the sets of transition delays, and
- clock adjusting means connected to the analyzing means and configured to adjust the clock in accordance to the calculated offset estimate.

node B     $T_{R1(B)}$        $T_{R2(B)}$            $t_B$

node A     $T_{s(A)}$            $T_{RR(A)}$     $t_A$

## Fig. 1

node B     $T_{R1(B)} = T_{R2(B)} = T_{R(B)}$     $t_B$

node A     $T_{S(A)}$            $T_{RR(A)}$     $t_A$

## Fig. 2

Fig. 3

Fig. 4

Fig. 5

Fig. 6

Fig. 7

Fig. 8

Fig. 9

Fig. 10

**European Patent Office**

**EUROPEAN SEARCH REPORT**

Application Number

EP 07 10 7929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 438 702 B1 (HODGE JAMES E [US]) 20 August 2002 (2002-08-20) * abstract; claims 1,4-7; figures 2-4 * * column 2, line 26 - line 46 * * column 3, line 38 - line 67 * * column 4, line 62 - column 6, line 45 * ----- | 1-8 | INV. H04J3/06 H04L12/56 |
| X | US 2007/086489 A1 (CARLSON SCOTT M [US] ET AL) 19 April 2007 (2007-04-19) * abstract; claims 1-3,7-9; figures 1,2,7 * * paragraphs [0003], [0005], [0008], [0009], [0019], [0021] - [0023] * * paragraphs [0027], [0028] * ----- | 1-8 | |
| A | US 2007/086490 A1 (CARLSON SCOTT M [US] ET AL) 19 April 2007 (2007-04-19) * abstract; claims 1,7; figure 2 * * paragraphs [0003], [0008], [0014], [0016] - [0018], [0021] * ----- | 1-8 | |
| A | EP 1 209 850 A1 (LUCENT TECHNOLOGIES INC [US]) 29 May 2002 (2002-05-29) * abstract; claims 1,7; figures 2-4 * * paragraphs [0005], [0010], [0011], [0015] - [0022] * ----- | 1-8 | TECHNICAL FIELDS SEARCHED (IPC) H04J H04L |
| A | EP 1 429 490 A1 (TEKTRONIX INTERNAT SALES GMBH [CH]) 16 June 2004 (2004-06-16) * abstract; figures 3,4 * * paragraphs [0014], [0017], [0028], [0033] - [0035], [0038] * ----- | 1-8 | |

The present search report has been drawn up for all claims

| Place of search | Date of completion of the search | Examiner |
|---|---|---|
| Munich | 1 August 2007 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 7929

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2007

| Patent document cited in search report | | | Publication date | Patent family member(s) | | Publication date |
|---|---|---|---|---|---|---|
| US 6438702 | | B1 | 20-08-2002 | NONE | | |
| US 2007086489 | | A1 | 19-04-2007 | CN | 1929363 A | 14-03-2007 |
| US 2007086490 | | A1 | 19-04-2007 | CN | 1929364 A | 14-03-2007 |
| EP 1209850 | | A1 | 29-05-2002 | NONE | | |
| EP 1429490 | | A1 | 16-06-2004 | US | 2004133391 A1 | 08-07-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D.L. MILL,.** The Network Time Protocol (Version 3) Specification, Implementation and Analysis. *RFC 1305, IEFT,* March 1992